Europäisches Patentamt

European Patent Office

Office européen des brevets

(11) Publication number: 0 508 123 A1

# EUROPEAN PATENT APPLICATION

(21) Application number: 92104021.8

(22) Date of filing: 09.03.92

(51) Int. Cl.⁵: G03G 15/00, G03G 15/04, H04N 1/387

(30) Priority: 09.03.91 JP 69054/91
25.03.91 JP 60094/91

(43) Date of publication of application:
14.10.92 Bulletin 92/42

(84) Designated Contracting States:
DE FR GB IT

(71) Applicant: MITA INDUSTRIAL CO., LTD.
2-28, 1-chome, Tamatsukuri Chuo-ku
Osaka 540(JP)

(72) Inventor: Fujimoto, Masaya
106, Syanbureddo Rokko, 3-2-10, Hieharacho

Nada-ku, Kobe-shi, Hyogo(JP)
Inventor: Shimatani, Akira
481, Wada
Sakai-shi, Osaka(JP)
Inventor: Matsushita, Tsukasa
203, Ikoma Haitsu, 3-27-12, Fukano
Daito-shi, Osaka(JP)

(74) Representative: Sajda, Wolf E., Dipl.-Phys. et
al
MEISSNER, BOLTE & PARTNER
Widenmayerstrasse 48 Postfach 86 06 24
W-8000 München 86(DE)

(54) Image processing apparatus.

(57) Main image data generating means (2) generates main image data indicating the density of a main image. Overlay image data generating means (4) generates overlay image data indicating the density of an overlay image. The main image data and the overlay image data are input to data selecting means (10). The data selecting means (10) outputs the overlay image data when the overlay image data is more than zero or outputs the main image data when the overlay image data is zero. Therefore, the density at a part where the main image overlaps with the overlay image is not increased. Thus, a copied image keeping an image of the main image can be obtained even at the part where the main image overlaps with the overlay image.

FIG. 1

## BACKGROUND OF THE INVENTION

The present invention relates to an image processing apparatus used in a digital copying machine, a printer or the like.

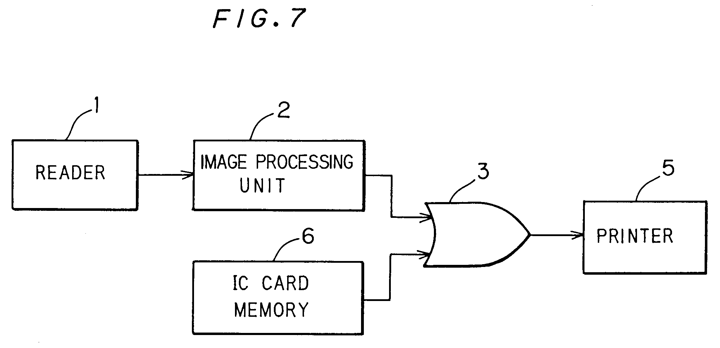

There has been known a digital copying machine having an overlay function which composes main image data (original image data) and overlay image data stored in an IC card memory. Fig. 7 shows a structure of a conventional copying machine. The main image data read by a reader 1 is processed in an image processing unit 2 and then output to an OR circuit 3 as data indicating density of the main image. Meanwhile, the overlay image data is output from the IC card memory 6 to the OR circuit 3 and then ORed with the main image data therein. The result is output from the OR circuit 3 to a printer 5 and then a copy is obtained.

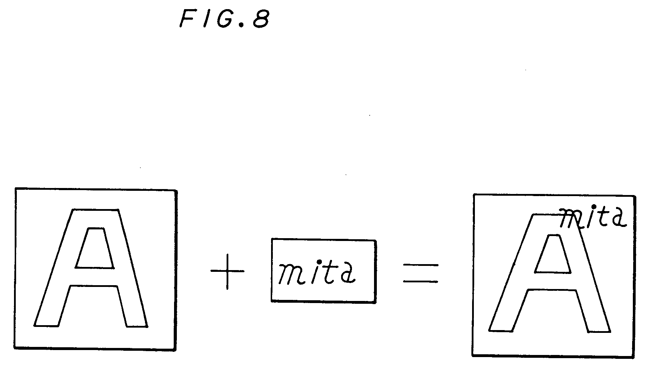

Fig. 8 shows an example of a copied image formed by the overlay function. In this example, the main image is "A" and the overlay image is "mita". The overlay image "mita" partially overlaps with the character "A" in a copied image.

According to the conventional digital copying machine, since the overlay image data is simply ORed with the main image data, the density at a part where the main image overlaps with the overlay image is increased, so that a part in a copied image is different from an image of the main image.

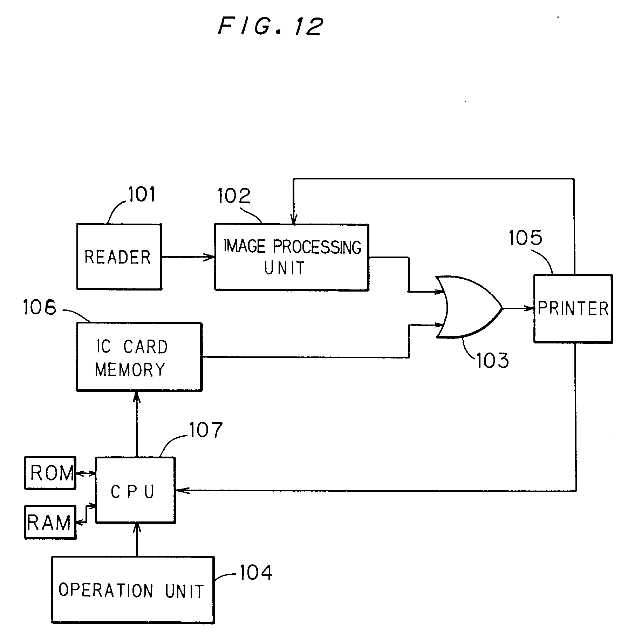

In addition, there has been known a digital color copying machine having an overlay function which composes original image data and overlay image data stored in an IC card memory. Fig. 12 shows a structure of the conventional digital color copying machine. The original image read by a reader 101 is analyzed into blue, green and red image data and processing such as conversion from BGR to MCY, color correction or density processing is performed to the image data corresponding to each color in an image processing unit 102. Thus, magenta, cyanogen and yellow image density data is provided. Then, one of magenta, cyanogen and yellow image density data is selected in accordance with a color signal from a printer 105 and then the image density data in that color is output to an OR circuit 103.

Meanwhile, the overlay image data is stored in an IC card memory 106 and when the same color as that input from the printer 105 to the image processing unit 102 is applied to the CPU 107, the overlay image data is output to the OR circuit 103 in accordance with the color signal under the control of the CPU 107.

Whether the overlay image is output from the IC card memory 106 or not is also controlled by an overlay recording color specified by an operation unit 104. For example, if red is selected as the overlay recording color, in order to reproduce red, the CPU 107 controls the IC card memory 106 so that the IC card memory 106 may read the overlay image data only when the magenta select signal and the yellow select signal are input from the printer 105 to the CPU 107.

Then, the image data output from the image processing unit 102 is ORed with that output from the IC card memory 106 in the OR circuit 105 and then the result is output to the printer 105 to be printed.

According to the conventional digital color copying machine, since the overlay image data is simply ORed with the original image density data, a desired overlay recording color is not obtained at a part where the original image overlaps with the overlay image.

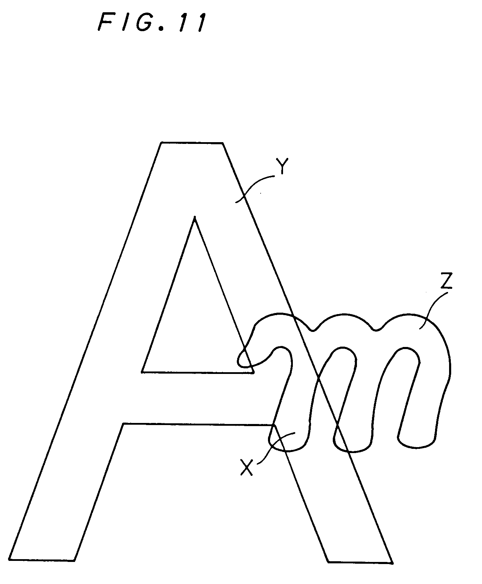

In order to describe the above situation in detail, it is assumed that an overlay image "m" is overlaid on an original image "A" as shown in Fig. 11. It is also assumed that the original image "A" is green (therefore, it is reproduced in green) and the overlay image "m" is reproduced in red as a recording color.

In regard to the original image "A", image data of the original image "A" having predetermined density is output to the OR circuit 103 when the color signal is cyanogen and yellow. In addition, in regard to the overlay image "m", the image data of the image "m" having predetermined density is output to the OR circuit 103 when the color signal is magenta and yellow.

When the image data is printed by the printer 105, a great part of the original image "A" (a part where it does not overlap with the overlay image "m") is printed in green and a great part of the overlay image "m" (a part where it does not overlap with the original image "A") is printed in red. However, red, that is, a desired overlay recording color could not be exactly reproduced at the part where the original image "A" overlaps with the overlay image "m" because magenta, cyanogen and yellow image data having predetermined density are all output at the part where the original image "A" overlaps with the overlay image "m".

## SUMMARY OF THE INVENTION

It is an object of the present invention to provide an image processing apparatus in which image density at a part where a main image overlaps with an overlay image is not increased and consequently, a copied image keeping the image of the main image can be obtained even at the part where the main image overlaps with the overlay image.

It is another object of the present invention to provide an image processing apparatus capable of faithfully reproducing an overlay recording color even at a part where an original image overlaps with an overlay image.

A first embodiment of an image processing apparatus according to the present invention includes means for generating main image data indicating the density of a main image, means for generating overlay image data indicating the density of an overlay image, and data selecting means to which the main image data and the overlay image data are input and from which the overlay image data is output when the overlay image data is more than zero or the main image data is output when the overlay image data is zero.

The overlay image data generating means includes, for example, means for generating overlay pixel data indicating whether printing takes place or not, and means for generating overlay image density data indicating the density of the overlay image when the overlay pixel data indicates that printing takes place.

According to the first embodiment of the present invention, the overlay image data is output when the overlay image data is more than zero or the main image data is output when the overlay image data is equal to zero, from image data composing means. Therefore, the density at the part where the main image overlaps with the overlay image is not increased. Thus, a copied image keeping the image of the main image can be obtained even at the part where the main image overlaps with the overlay image.

A second embodiment of an image processing apparatus of the present invention includes means for generating main image data indicating the density of a main image, means for generating overlay image data indicating the density of an overlay image, means for comparing the overlay image data with the main image data, and data selecting means to which the main image data and the overlay image data are input and also an output of the comparing means is input and from which either the main image data or the overlay image data is output in accordance with the result of the comparing means.

The overlay image data generating means includes, for example, means for generating overlay pixel data indicating whether printing takes place or not, and means for generating overlay image density data indicating the density of the overlay image when the overlay pixel data indicates that printing takes place.

The data selecting means in the second image processing apparatus outputs either the main image data or the overlay image data whose indicating density is, for example, higher than the other, which is determined by the comparing means.

According to the second embodiment of the present invention, the overlay image data is compared with the main image data by the comparing means. Then, either the main image data or the overlay image data is output from the image data composing means in accordance with the result of the comparing means. Therefore, the density at the part where the main image overlaps with the overlay image is not increased. Thus, a copied image keeping the image of the main image can be obtained even at the part where the main image overlaps with the overlay image.

A third embodiment of an image processing apparatus of the present invention includes means for generating main image data indicating the density of a main image, means for generating overlay image data indicating the density of an overlay image, means for selecting either a first overlay mode or a second overlay mode, data selecting means to which the main image data and the overlay image data are input and from which the overlay image data is output when the overlay image data is more than zero or the main image data is output when the overlay image data is zero in a case where the first overlay mode is selected, or either the main image data or the overlay image data is output in accordance with the result of comparison between the overlay image data and the main image data in a case where the second overlay mode is selected.

The overlay image data generating means includes, for example, means for generating overlay pixel data indicating whether printing takes place or not, and means for generating overlay image density data indicating the density of the overlay image when the overlay pixel data indicates that printing takes place.

In a case where the second overlay mode is selected, the data selecting means of the third image processing apparatus outputs either the main image data or the overlay image data whose indicating density is, for example, higher than the other, which is determined by the comparing means.

According to the third embodiment of the present invention, either the first overlay mode or the second overlay mode is selected by the mode selecting means. In a case where the first overlay mode is selected, the overlay image data is output when the overlay image data is more than zero, or the main image data is output when the overlay image data is equal to zero, from the image data composing means. Therefore, the density at the part where the main image overlaps with the overlay image is not increased. Thus, a copied image keeping the image of the main image can be obtained even at the part where the main image overlaps with an overlay image.

A fourth embodiment of an image processing apparatus of the present invention includes means for analyzing a color of an original image and outputting image density data in each analyzed color, means for generating overlay image density data in each analyzed color in accordance with a recording color of the overlay image, means for generating overlay pixel data indicating whether the overlay image is printed or not, and data selecting means for outputting the overlay image density data when the overlay pixel data indicates that printing takes place or outputting the original image density data when the overly pixel data indicates that printing does not take place.

According to the fourth embodiment of the present invention, when the overlay pixel data indicates that the overlay image is printed, the overlay image density data in each analyzed color corresponding to the recording color of the overlay image is output. Alternatively, when the overlay pixel data indicates that the overlay image is not printed, the original image density data in each analyzed color of the original image is output from the data selecting means. Thus, the color does not change even at the part where the original image overlaps with the overlay image, so that it is possible to print the whole overlay image in a desired recording color.

The invention will be described below in more detail in connection with preferred embodiments and with reference to the accompanying drawings.

## BRIEF DESCRIPTION OF THE INVENTION

Fig. 1     is a block diagram according to a first embodiment of the present invention;
Fig. 2     is a block diagram according to a second embodiment of the present invention;
Fig. 3     is a block diagram according to a third embodiment of the present invention;
Fig. 4     is a block diagram according to a fourth embodiment of the present invention;
Fig. 5     is a block diagram according to a fifth embodiment of the present invention;
Fig. 6     is a block diagram according to a sixth embodiment of the present invention;
Fig. 7     is a block diagram according to a conventional example;
Fig. 8     is a view showing an example of a copied image provided by an overlay function;
Fig. 9     is a schematic view showing a digital color copying machine according to a seventh embodiment of the present invention;
Fig. 10     is a block diagram according to a seventh embodiment of the present invention;
Fig. 11     is a view showing an example of a copied image provided by the overlay function; and
Fig. 12     is a block diagram according to a conventional example.

## DETAILED DESCRIPTION OF THE PREFERRED EMBODIMENTS

Embodiments of the present invention in which a digital copying machine is used will be described in reference to the drawings hereinafter.

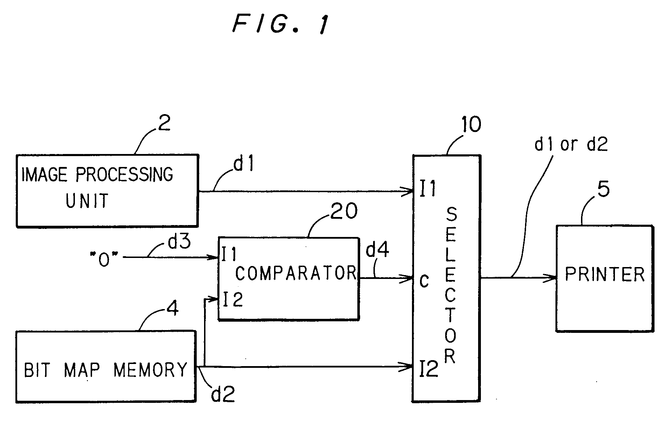

Fig. 1 shows a first embodiment of the present invention.

Referring to Fig. 1, 8-bit main image data (original image data) d1 indicating the density of a main image is output from an image processing unit 2 to a first input terminal I1 of a selector 10 and 8-bit overlay image data d2 indicating the density of an overlay image is output from a bit map memory 4 to a second input terminal I2 of a comparator 20 and to a second input terminal I2 of the selector 10.

Data d3 indicating "0" is input to a first input terminal I1 of the comparator 20. The comparator 20 compares data d3 of an "0" input to the first input terminal I1 with the overlay image data d2 input to the second input terminal I2 and outputs a 1-bit signal d4 indicating "1" when the overlay image data d2 is more than "0" (d2 > d3) or output a 1-bit signal d4 indicating "0" when the overlay image data d2 is "0" (d2 = d3), to a control input terminal C of the selector 10.

The selector 10 outputs the main image data d1 to a printer 5 when the signal d4 is "0" or outputs the overlay image data d2 to the printer 5 when the signal d4 is "1".

More specifically, when the overlay image data d2 is "O", the main image data d1 is output to the printer 5. Alternatively, when the overlay image data d2 is more than "O", the overlay image data d2 is output to the printer 5.

Therefore, the density at a part where the main image overlaps with the overlay image is that of the overlay image indicated by the overlay image data d2. Thus, the density at the part where the main image overlaps with the overlay image is not increased, so that a copied image keeping an image of the main image can be obtained even at the part where the main image overlaps with the overlay image.

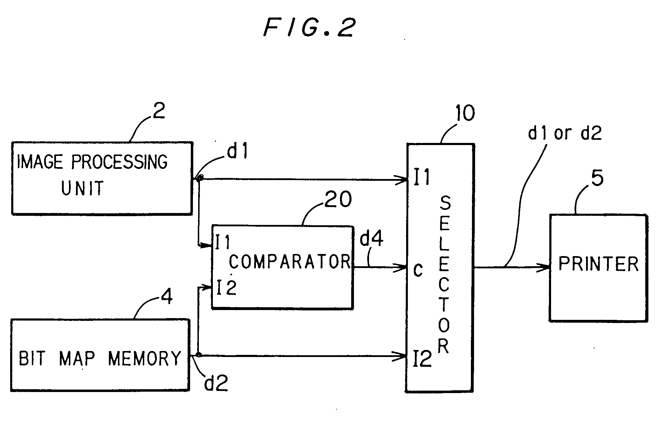

Fig. 2 shows a second embodiment of the present invention.

Referring to Fig. 2, 8-bit main image data d1 indicating the density of a main image is output from an image processing unit 2 to a first input terminal I1 of a comparator 20 and to a first input terminal I1 of a selector 10. In addition, 8-bit overlay image data d2 indicating the density of an overlay image is output from a bit map memory 4 input to a second input terminal I2 of the comparator 20 and to a second input terminal I2 of the selector 10.

The comparator 20 compares the main image data d1 input to the first input terminal I1 with the overlay image data d2 input to the second input terminal I2 and outputs a 1-bit signal d4 indicating "0" when the main image data d1 is equal to the overlay image data d2 or more (d1 ≧ d2), or outputs an 8-bit signal d4 of "1" when the main image data d1 is less than the overlay image data d2 (d1 < d2), to a control input terminal C̄ of the selector 10.

The selector 10 outputs the main image data d1 to a printer 5 when the signal d4 is "O" or outputs the overlay image data d2 to the printer 5 when the signal d4 is "1".

More specifically, the density of the main image (the main image data d1) is compared with that of the overlay image (the overlay image data d2) and when the density of the main image is equal to that of the overlay image or more (d1 ≧ d2), the signal d4 is "O" and the main image data d1 is output from the selector 10 to the printer 5. Alternatively, when the density of the main image is less than that of the overlay image (d1 < d2), the signal d4 is "1" and the overlay image data d2 is output from the selector 10 to the printer 5.

Therefore, the density at a part where the main image overlaps with the overlay image is that of either the main image or the overlay image which is higher than the other. Thus, the density at a part where the main image overlaps with the overlay image is not increased, so that a copied image keeping an image of the main image can be obtained even at the part where the main image overlaps with the overlay image.

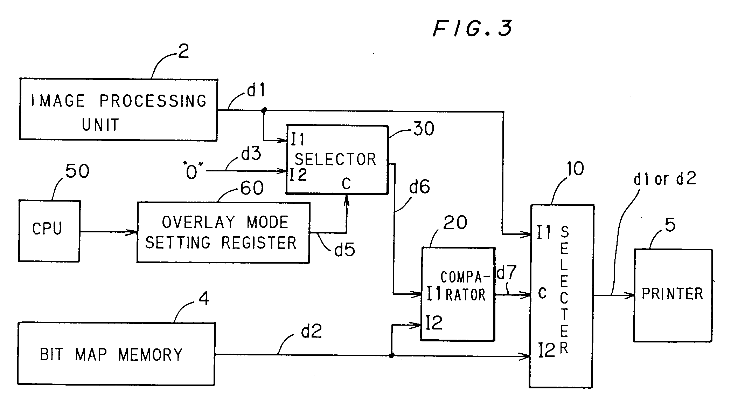

Fig. 3 shows a third embodiment of the present invention.

Referring to Fig. 3, 8-bit main image data d1 indicating the density of a main image is output from an image processing apparatus 2 to a first input terminal I1 of a selector 30 and also input to a selector 10. Data d3 indicating "0" is input to a second input terminal I2 of the selector 30. A mode select signal d5 is output from an overlay mode setting register 60 to a control input terminal C̄ of the selector 30.

The overlay mode setting register 60 is controlled by a CPU 50 and outputs the 1-bit mode select signal d5 indicating "1" when a first overlay mode is set or outputs the 1-bit mode select signal d3 indicating "0" when a second overlay mode is set, to the selector 30. The selector 30 outputs data d3 of "0" when the mode select signal d5 output from the overlay mode setting register 60 is "1" or outputs the main image data d1 when the mode select signal d3 output from the overlay mode setting register 60 is "0", to a first input terminal I1 of the comparator 20.

Meanwhile, 8-bit overlay image data d2 indicating the density of an overlay image is output from a bit map memory 4 to a second input terminal I2 of the comparator 20. The overlay image data d2 is also input to a second input terminal I2 of the selector 10.

The comparator 20 compares the data d6 output from the selector 30 to the first input terminal I1 with the overlay image data d2 input to the second input terminal I2 and then outputs a 1-bit signal d7 of "0" when the data d6 is equal to the overlay image data d2 or more or outputs a 1-bit signal d7 of "1" when the data d6 is less than the overlay image data d2, to a control input terminal C̄ of the selector 10.

The selector 10 outputs the main image data d1 when the signal d7 is "0" or outputs the overlay image data d2 when the signal d7 is "1", to a printer 5.

In a case where the first overlay mode is set at the overlay mode setting register 60, since the data d3 of "0" is output from the selector 30 to the first input terminal I1 of the comparator 20, operation of this circuit is the same as in the circuit shown in Fig. 1. More specifically, when the overlay image data d2 is "0", the main image data d1 is output from the selector 10 to the printer 5. Alternatively, when the overlay image data d2 is more than "O", the overlay image data d2 is output from the selector 10 to the printer 5.

Therefore, in a case where the first overlay mode is set, the density at a part where the main image overlaps with the overlay image is that of the overlay image indicated by the overlay image data d2. Thus, the density at the part where the main image overlaps with the overlay image is not increased, so that a copied image keeping an image of the main image can be obtained even at the part where the main image overlaps with the overlay image.

Alternatively, in a case where a second overlay mode is set at the overlay mode setting register 60, since the main image data d1 is output from the selector 30 to the first input terminal I1 of the comparator 20, operation of this circuit is the same as in the circuit shown in Fig. 2. More specifically, the density of the main image (indicated by the main image data d1) is compared with that of the overlay image (indicated by the overlay image data d2). When the density of the main image is equal to that of the overlay image or more (d1 ≧ d2), the signal d7 is "0" and then the main image data d1 is output from the selector 10 to the printer 5. Alternatively, when the density of the main image is less than that of the overlay image (d1 < d2), the signal d7 is "1" and then the overlay image data d2 is output from the selector 10 to the printer 5.

Therefore, in a case where the second overlay mode is set, density at the part where the main image overlaps with the overlay image is that either of the main image or the overlay image which is higher than the other. Thus, a copied image keeping an image of the main image can be obtained even at the part where the main image overlaps with the overlay image.

In addition, in a case where the main image data has a plurality of colors in a digital color copying machine, the overlay mode may be switched every color. The overlay mode is automatically switched by the CPU 50 at the overlay mode setting register 60.

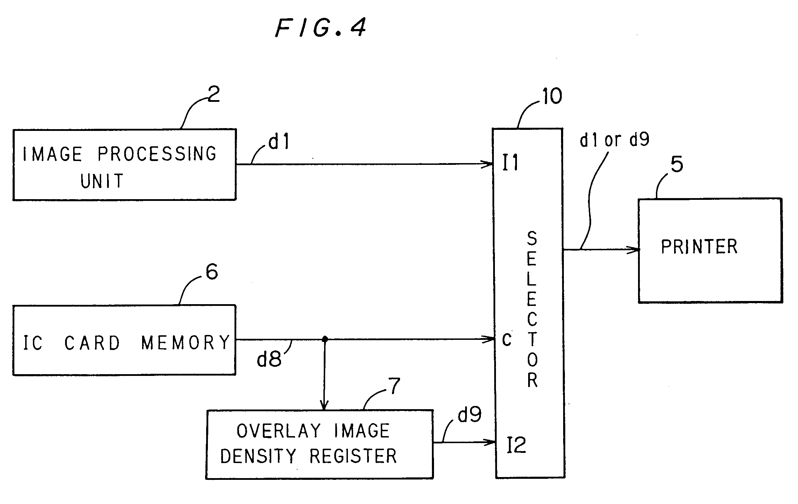

Fig. 4 shows a fourth embodiment of the present invention.

Referring to Fig. 4, 8-bit main image data d1 indicating the density of a main image is output from an image processing unit 2 to a first input terminal I1 of a selector 10. Meanwhile, 1-bit overlay pixel data d8 indicating white (no printing takes place) or black (printing takes place) is output from an IC card memory 6 to an overlay image density register 7 and also to an control input terminal C of the selector 10. It is assumed that the overlay pixel data d8 is "1" when it is black or "0" when it is white.

Data indicating the density of the overlay image has already been set in the overlay image density register 7. The register 7 outputs 8-bit overlay image density data d9 indicating the density of the overlay image to a second input terminal I2 of the selector 10 when the overlay pixel data d8 of "1" is output from the IC card memory 6 thereto. Alternatively, when the overlay pixel data d8 is "0", the contents of the overlay image density data d9 is "0". The selector 10 outputs the main image data d1 when the overlay pixel data d8 is "0" or outputs overlay image density data d9 when the overlay pixel data d8 is "1", to a printer 5.

More specifically, when the overlay pixel image data d8 is "O", the main image data d1 is output from the selector 10 to the printer 5. Alternatively, when the overlay pixel data d8 is "1", the overlay image density data d9 is output from the selector 10 to the printer 5.

Therefore, the density at a part where the main image overlaps with the overlay image is that of the overlay image which has already been set in the overlay image density register 7. Thus, the density at the part where the main image overlaps with the overlay image is not increased, so that a copied image keeping an image of the main image can be obtained even at the part where the main image overlaps with the overlay image.

Furthermore, according to this embodiment of the present invention, since the 1-bit overlay pixel data d8 is stored in the IC card memory 6, the memory capacity of the IC card memory 6 can be reduced. In addition, the density of the overlay image can easily be changed by changing the contents of the overlay image density register 7. Still furthermore, the 1-bit overlay pixel data d8 stored in the IC card memory 6 can be directly used as a control signal for the selector 10.

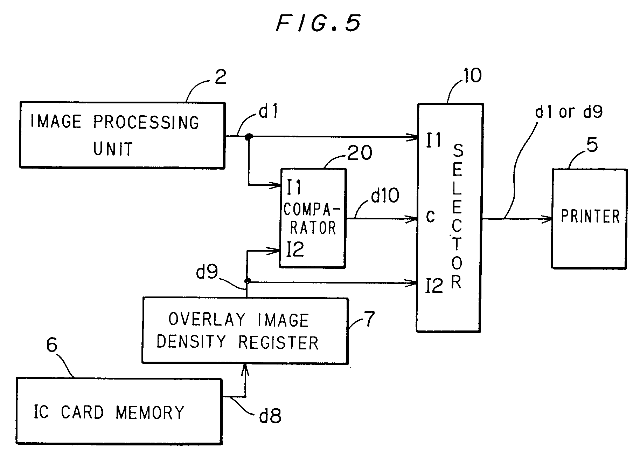

Fig. 5 shows a fifth embodiment of the present invention.

Referring to Fig. 5, 8-bit main image data d1 indicating density of a main image is output from an image processing unit 2 to a first input terminal I1 of a comparator 20 and also to a first input terminal I1 of a selector 10. In addition, 1-bit overlay pixel data d8 indicating white or black is output from an IC card memory 6 to an overlay image density register 7. It is assumed that the overlay pixel data d8 is "1" when it is black, or "0" when it is white.

Overlay image density data has already been set in the overlay image density register 7. The overlay image density register 7 outputs 8-bit overlay image density data d9 indicating density of the overlay image to a second input terminal I2 of the comparator 20 and also to a second input terminal I2 of the selector 10 when the overlay pixel data d8 of "1" is input thereto. When the overlay pixel data d8 is "0", the contents of the overlay image density data d9 is "0".

The comparator 20 compares the main image data d1 input to the first input terminal I1 with the overlay image density data d9 input to the second input terminal I2 and then outputs to a control input terminal C of the selector 10 a 1-bit signal d1O of "0" when the main image data d1 is equal to the overlay image density data d9 or more, or outputs a 1-bit signal d1O of "1" when the main image data d1 is less than the overlay image density data d9.

The selector 10 outputs the main image data d1 to a printer 5 when the signal d1O is "O" or outputs the overlay image density data d9 to the printer 5 when the signal d1O is "1".

More specifically, when the overlay pixel data d8 is "0", the signal d10 is "O" and the main image data d1 is output from the selector 10. Alternatively, when the overlay pixel data d8 is "1", the density of the main image (indicated by the main image data d1) is compared with that of the overlay image (indicated by the overlay image density data d9). Then, if the density of the main image is equal to that of the overlay image or more ($d1 \geq d9$), the signal d1O is "O" and the main image data d1 is output from the selector 10 to the printer 5. Alternatively, if the density of the main image is less than that of the overlay image ($d1 < d9$), the signal d1O is "1" and then the overlay image density data d9 is output from the selector 10 to the printer 5.

Therefore, density at a part where the main image overlaps with the overlay image is that of either the main image or the overlay image which is higher than the other. Thus, the density at the part where the main image overlaps with the overlay image is not increased, so that a copied image keeping an image of the main image can be obtained even at the part where the main image overlaps with the overlay image.

Furthermore, according to this embodiment of the present invention, since the 1-bit overlay pixel data d8 is stored in the IC card memory 6, the memory capacity of the IC card memory 6 can be reduced. In addition, the density of the overlay image can easily be changed by changing the contents of the overlay image density register 7.

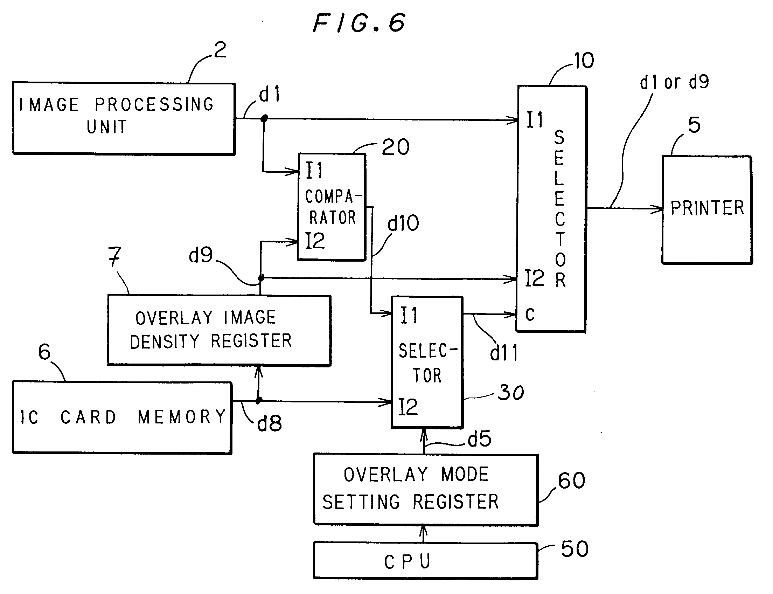

Fig. 6 shows a sixth embodiment of the present invention.

Referring to Fig. 6, 8-bit main image data d1 indicating density of a main image is output from an image processing unit 2 to a first input terminal I1 of a comparator 20 and also to a first input terminal I1 of a selector 10. In addition, 1-bit overlay pixel data d8 indicating white or black is output from an IC card memory 6 to an overlay image density register 7 and also to a second input terminal I2 of a selector 30. It is assumed that the overlay pixel data d8 is "1" when it is black or "0" when it is white.

Overlay image density data has already been set in the overlay image density register 7. The register 7 outputs 8-bit overlay image density data d9 indicating density of the overlay image to a second input terminal I2 of the comparator 20 and also to a second input terminal I2 of the selector 10 when the overlay pixel data d8 of "1" is input thereto. When the overlay pixel data d8 is "O", the contents of the overlay image density data d9 is "O".

The comparator 20 compares the main image data d1 input to the first input terminal I1 with the overlay image data d9 input to the second input terminal I2 and outputs to a control input terminal $\overline{C}$ of the selector 10 a 1-bit signal d1O of "O" when the main image data d1 is equal to the data d9 or more, or outputs a 1-bit signal d1O of "1" when the data d1 is less than the data d9.

An overlay mode setting register 60 is controlled by a CPU 50 and outputs 1-bit mode select signal d5 indicating "1" when a first overlay mode is set or outputs 1-bit mode select signal d5 indicating "O" when a second overlay mode is set, to a control input terminal $\overline{C}$ of the selector 30. The selector 30 outputs an overlay pixel data d8 when the mode select signal d5 output from the overlay mode setting register 60 is "1" or outputs a signal d1O when the mode select signal d5 output from the overlay mode setting register 60 is "O", to a control input terminal $\overline{C}$ of the selector 10.

The selector 10 outputs the main image data d1 to the printer 5 when a signal d11 output from the selector 30 is "O" or outputs the overlay image density data d9 to the printer 5 when the signal d11 is "1".

In a case where the first overlay mode is set at the overlay mode setting register 60, the overlay pixel data d8 is output from the selector 30 to the selector 10, so that the operation in this circuit is the same as that of the circuit shown in Fig. 4. More specifically, when the overlay pixel data d8 is "O", the main image data d1 is output from the selector 10 to the printer 5. Alternatively, when the overlay pixel data d8 is "1", the overlay image density data d9 is output from the selector 10 to the printer 5.

Therefore, if the first overlay mode is set, the density at a part where the main image overlaps with overlay image is that of the overlay image which has been previously set in the overlay image density register 7. Thus, the density at the part where the main image overlaps with the overlay image is not increased, so that a copied image keeping an image of the main image can be obtained even at the part where the main image overlaps with the overlay image.

Alternatively, if the second overlay mode is set, the comparison result signal d1O is output from the selector 30 to the selector 10, so that the operation in this circuit is the same as that of the circuit shown in Fig. 5. More specifically, when the overlay pixel data d8 is "O", the signal d1O is "O" and then the main image data d1 is output from the selector 10 to the printer 5.

When the overlay pixel data d8 is "1", the density of the main image (indicated by the main image data d1) is compared with that of the overlay image (indicated by the overlay image density data d9). Then, if the density of the main image is equal to that of the overlay image or more (d1 $\geq$ d9), the signal d1O is "O" and then the main image data d1 is output from the selector 10 to the printer 5. If the density of the main image is less than that of the overlay image (d1 < d9), the signal d1O is "1" and the overlay image density data d9 is output from the selector 10 to the printer 5.

Therefore, in a case where the second overlay mode is set, the density at the part where the main image overlaps with the overlay image is that of either the main image or the overlay image which is higher than the other. Thus, the density at the part where the main image overlaps with the overlay image is not increased, so that a copied image keeping an image of the main image can be obtained even at the part where the main image overlaps with the overlay image.

Furthermore, according to this embodiment of the present invention, since the 1-bit overlay pixel data d8 is stored in the IC card memory 6, the memory capacity of the IC card memory 6 can be reduced. In addition, the density of the overlay image can easily be changed by changing the contents of the overlay image density register 7. Furthermore, the 1-bit overlay pixel data d8 stored in the IC card memory 6 can directly be used as the control signal for the selector 10. If the main image data has a plurality of colors in a digital color copying machine, the overlay mode may be switched every color. In this case, the overlay mode is automatically switched by the CPU 50 at the overlay mode setting register 60.

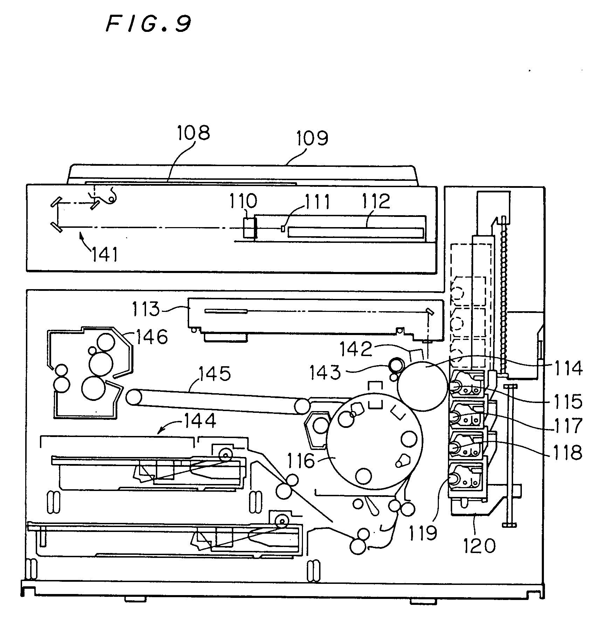

Figs. 9 to 11 show a seventh embodiment of the present invention in which the digital color copying machine is used.

Fig. 9 shows a structure of the digital color copying machine. A color original is put on a contact glass 108 and covered by an original cover 109. Then, the original is scanned by a scanning optical system 141 consisting of a color scanner and thus obtained image information is introduced from a condensing lens 110 to a light receiving element 111 such as a CCD using light as a medium. Then, the image information is converted into an electric signal and processed by an image processing circuit 112. Thereafter, the image information is drawn on a photoconductive drum 114 by a laser scanner unit 113 as a latent image. In addition, as will be described later, the image data of the overlay image is also processed by the image processing circuit 112 and composed with the original image data. Prior to this, a surface of the photoconductive drum 114 is charged with electricity by a main charger 142.

When a color image is formed, first, an M developing unit 115 is disposed so as to be opposed to the photoconductive drum 114 and then a color signal to be described later is sent to the image processing circuit 112. Then, a latent image is formed on the photoconductive drum 114 by a laser beam on the basis of the image density data of magenta and then the M developing unit 115 having a toner of magenta develops the latent image on the photoconductive drum 114 with the toner of magenta whose amount is determined on the basis of the image density data of magenta. Then, the image developed on the photoconductive drum 114 is transferred to a sheet which has been transported from a feeding unit 144 and wound round the surface of a transfer drum 116.

The sheet is attached on the surface of the transfer drum 116 as it is to receive next transferring process. More specifically, after the photoconductive drum 114 has been cleaned by a cleaning unit 143 to remove the remaining toner thereon, it is discharged by a discharger (not shown) and then charged by a main charger 142 again. Then, when a C developing unit 117 is disposed so as to be opposed to the photoconductive drum 114, a color signal to be described later is input to the image processing circuit 112. Thus, a latent image formed on the photoconductive drum 114 by a laser beam is developed on the basis of the image density data of cyanogen by the C developing unit 117.

Meanwhile, in this embodiment of the present invention, the M developing unit 115 for developing in magenta, the C developing unit 117 for developing in cyanogen, a Y developing unit 118 for developing in yellow and a BK developing unit 119 for developing in black are vertically disposed on a moving mechanism 120 which moves vertically as shown in the figure.

Then, the image developed on the photoconductive drum 114 with the toner of cyanogen is transferred to the sheet (on which the magenta image has been transferred) attached on the transfer drum 116. In the same manner, yellow and black images are transferred onto the above sheet and thus a full-color image is formed. Thereafter, the sheet on which the color image is formed is detached from the transfer drum 116 and transported to a fixing unit 146 through a transporting unit 145 and then fixed at the unit 146. Then, the sheet is discharged from the copying machine.

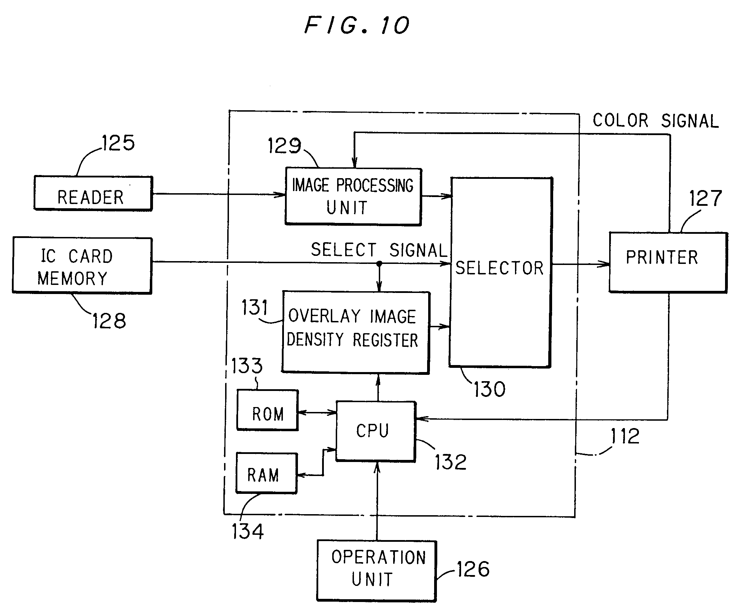

Referring to Fig. 10, the image processing circuit according to the present invention will be described.

The image processing circuit 112 receives original image data from a reader 125 including a light receiving element 111 and the like and overlay image data from an IC card memory 128. In addition, the image processing circuit 112 also receives information from an operation unit 126. The image processing circuit 112 performs predetermined image processing on the basis of the above image data and the input information and outputs image data to a printer 127 including a laser scanner unit 113 and the like. The printer 127 forms the image on the basis on the data.

The image processing circuit 112 will be described in more detail.

The image processing circuit 112 has an image processing unit 129. The original image read by the reader 125 is analyzed into blue, green and red image density data and then input to the image processing unit 129. The image processing unit 129 converts BGR to MCY to provide magenta, cyanogen and yellow original image density data. In addition, the image processing unit 129 includes a circuit for correcting the magenta, cyanogen and yellow original image density data and a circuit for density processing. One of the magenta, cyanogen and yellow original image density data is selected in accordance with a color signal input from the printer 127 and then output to the selector 130. For example, when the M developing unit 115 is disposed at the printer 127 so as to be opposed to the photoconductive drum 114, the magenta original image density data is output from the image processing unit 129 by the color signal for selecting magenta. The image density data output from the image processing unit 129 to the selector 130 is, for example, 8-bit data.

Meanwhile, the overlay image data is stored in the IC card memory 128. The overlay image data stored in the IC card memory 128 is stored as overlay pixel data in which one pixel corresponds to one bit. When data of a pixel is "1", the overlay image of that pixel is to be printed. Alternatively, when data of a pixel is "0", printing does not take place. As described above, since the overlay image is stored as 1-bit data, a memory region can be considerably reduced.

Furthermore, as will be described later, since the data can be used as a select signal of the selector 130 as it is, the structure of the circuit can be simplified. The overlay pixel data is input to the selector 130 as the select signal and also input to the overlay image density register 131 as a synchronizing signal.

The density of the overlay image is determined in accordance with a value set in the overlay image density register 131. The value set in the register 131 is controlled as follows. That is, the register 131 is controlled by a CPU 132 which receives the color signal from the printer 127 and information for specifying a color of the overlay image from the operation unit 126. In addition, a ROM 133 and a RAM 134 are connected to the CPU 132. Data shown in Table 1 is recorded in the ROM 133.

Table 1

| | | Color signal | | |
|---|---|---|---|---|
| | | Magenta | Cyanogen | Yellow |
| Overlay recording color | Red | N | 0 | N |
| | Blue | N | N | 0 |
| | Green | 0 | N | N |
| | Magenta | N | 0 | 0 |
| | Cyanogen | 0 | N | 0 |
| | Yellow | 0 | 0 | N |
| | Black | N | N | N |

In the Table 1, "N" designates a value of density which is stored as 8-bit data. For example, in a case where a recording color of the overlay image specified by the operation unit 126 is red and a color signal from the printer 127 is magenta, the CPU 132 sets a density value "N" consisting of 8-bit data in the register 131 in reference to the ROM 133. Then, when the color signal changes from magenta to cyanogen, it sets the density value "0" in the register also in reference to the ROM 133. The same processing is performed regarding to yellow. The value set in the register 131 is input to the selector 130.

The selector 130 selects the data from the overlay image density register 131 when the overlay pixel data (select signal) from the IC card memory 128 is "1" (the overlay image is printed) or selects the original image density data from the image processing unit 129 when the overlay pixel data is "0" (the overlay image is not printed) and outputs it to the printer 127.

In addition, since the overlay pixel data stored in the IC card memory 128 is input to the overlay image density register 131 as the synchronizing signal, the overlay image can exactly be reproduced.

Next, operation of this embodiment of the present invention will be described.

It is assumed that an overlay image "m" is printed partially on an original image "A" as shown in Fig. 11. It is also assumed that the original image "A" is green (therefore, it is reproduced in green) and it is set at the operation unit 126 that the overlay image "m" is reproduced in a recording color of red. In addition, a region where the image "A" overlaps with the image "m" is represented by X, a region of the image "A" except for the region X is represented by Y and a region of the image "m" except for the region X is represented by Z.

When the color signal of magenta is output from the printer 127 to the image processing unit 129 and to the CPU 132, the image processing unit 129 outputs original image density data of magenta to the selector 130. In this case, since the original image is originally green, the original image density data of magenta is "0".

Meanwhile, since the recording color from the operation unit 126 is red and the color signal from the

9

printer 127 is magenta, the CPU 132 sets the density value "N" in the overlay image density register 131 in reference to the Table 1 and outputs the value to the selector 130.

As the pixel data "1" is output from the IC card memory 130 for the overlay image "m", the density value "N" set in the register 131 as the overlay image density data is output from the selector 130 to the printer for the part corresponding to the image "m". Although density data for the part except for the image "m" is output from the image processing unit 129, since "0" is output in this case, only the part of the image "m" is printed in magenta. More specifically, the density of the regions X and Z is N.

Then, when the color signal of cyanogen is output from the printer 127 to the image processing unit 129 and to the CPU 132, the original image density data of cyanogen is output from the image processing unit 129 to the selector 130. Meanwhile, since the recording color from the operation unit 126 is red and the color signal from the printer 127 is cyanogen, the CPU 132 sets the density value "O" into the overlay image density register 131 and the value is output to the selector 130.

Since the pixel data "1" is output from the IC card memory 130 for the overlay image "m", the selector 130 outputs the density value "0" set in the register 131 to the printer 127 as the overlay image density data for the part corresponding to the image "m". However, since the density set value is "0" in this case, the part corresponding to the image "m" is not printed. Since the density data of cyanogen is output from the image processing unit 129 for the part except for the image "m", the image "A" except for the part where the image "A" overlaps with the image "m" is only printed. More specifically, the density at the region Y is the original density.

In the same manner, in a case where the color signal is yellow, the density of the region Y is the original density and the density of the regions X and Z is N.

As described above, since magenta and yellow are overlaid at the regions X and Z in density N, the whole of the overlay image "m" is printed in red. In addition, since cyanogen and yellow are overlaid at the region Y in the original density, the image "A" except for the part where the image "A" overlaps with the image "m" is printed in the color of the original.

In addition, the above full-color printing is performed by repeatedly applying toners on a transfer sheet and then fixing it in a case of the copying machine shown in Fig. 9.

Although the data shown in the Table 1 is stored in the ROM 133 in this embodiment of the present invention, it may be stored in the ROM 134 or data may be input from the operation unit 126 one after another.

In addition, the density value shown in the Table 1 optionally varies. Thus, a tone of a color of the overlay recording color can vary and also the number of recording colors can be increased. More specifically, the tone of the color of the overlay image can easily be varied by using the overlay density setting register.

Furthermore, although the process each of respective colors is sequentially performed by the color signal applied from the printer 127 in this embodiment of the present invention, the selector 130 and the register 131 may be provided for each of the respective colors to perform process in parallel.

Various details of the invention may be changed without departing from its spirit nor its scope. Furthermore, the foregoing description of the embodiments according to the present invention is provided for the purpose of illustration only, and not for the purpose of limiting the invention.

**Claims**

1. An image processing apparatus comprising:
    - means (2; 125, 129) for generating main image data indicating the density of a main image;
    - means (4; 6, 7; 128, 131) for generating overlay image data indicating the density of an overlay image; and
    - data selecting means (10, 130) to which the main image data and the overlay image data are input and from which the overlay image data is output when the overlay image data is more than zero or the main image data is output when the overlay image data is zero.

2. The apparatus according to claim 1,
    wherein the overlay image data generating means (4; 6, 7; 128, 131) comprises:
    - means (6; 128) for generating overlay pixel data indicating whether printing takes place or not; and
    - means (7; 131) for generating overlay image density data indicating the density of the overlay image when the overlay pixel data indicates that printing takes place.

3. An image processing apparatus comprising:
- means (2) for generating main image data indicating the density of a main image;
- means (4, 6, 7) for generating overlay image data indicating the density of an overlay image;
- means (20) for comparing the overlay image data with the main image data; and
- data selecting means (10, 30) to which the main image data and the overlay image data are input as well as an output of the comparing means (20) is input and from which either the main image data or the overlay image data is output in accordance with the result of the comparing means (20).

4. The apparatus according to claim 3,
wherein the overlay image data generating means (4, 6, 7) comprises:
- means (6) for generating overlay pixel data indicating whether printing takes place or not; and
- means (7) for generating overlay image density data indicating the density of the overlay image when the overlay pixel data indicates that printing takes place.

5. The apparatus according to claim 3 or 4,
wherein the data selecting means (10, 30) outputs either the main image data or the overlay image data whose indicating density is higher than the other, which is determined by the comparing means (20).

6. An image processing apparatus comprising:
- means (2) for generating main image data indicating the density of a main image;
- means (4, 6, 7) for generating overlay image data indicating the density of an overlay image;
- means (60) for selecting either a first overlay mode or a second overlay mode;
- data selecting means (10, 30) to which the main image data and the overlay image data are input and from which the overlay image data is output when the overlay image data is more than zero, or the main image data is output when the overlay image data is zero in a case where the first overlay mode is selected, or either the main image data or the overlay image data is output in accordance with the result of comparison (20) between the overlay image data and the main image data in a case where the second overlay mode is selected.

7. The apparatus according to claim 6,
wherein the overlay image data generating means (4, 6, 7) comprises:
- means (4, 6) for generating overlay pixel data indicating whether printing takes place or not; and
- means (7) for generating overlay image density data indicating the density of the overlay image when the overlay pixel data indicates that printing takes place.

8. The apparatus according to claim 6 or 7,
wherein the data selecting means (10, 30) outputs either the main image data or the overlay image data whose indicating density is higher than the other, which is determined by the comparing means (20) in a case where the second overlay mode is selected.

9. An image processing apparatus comprising:
- means (125) for analyzing a color of an original image and outputting image density data in each analyzed color;
- means (131) for generating overlay image density data in each analyzed color in accordance with a recording color of an overlay image;
- means (128) for generating overlay pixel data indicating whether the overlay image is printed or not; and
- data selecting means (130) for outputting the overlay image density data when the overlay pixel data indicates that printing takes place or outputting the original image density data when the overlay pixel data indicates that printing does not take place.

## FIG. 1

EP 0 508 123 A1

FIG. 2

## FIG.3

F I G. 4

IMAGE PROCESSING UNIT  2 — d1 → I1

IC CARD MEMORY  6 — d8

OVERLAY IMAGE DENSITY REGISTER  7 — d9 → I2

SELECTOR  10 — d1 or d9 → PRINTER  5

C

# FIG.5

FIG.6

EP 0 508 123 A1

# FIG.7

FIG.8

FIG.9

FIG. 10

COLOR SIGNAL

125 READER

128 IC CARD MEMORY

129 IMAGE PROCESSING UNIT

131 OVERLAY IMAGE DENSITY REGISTER

SELECT SIGNAL

130 SELECTOR

127 PRINTER

112

132 CPU

133 ROM

134 RAM

126 OPERATION UNIT

*F I G . 1 1*

# FIG. 12

European Patent
Office

**EUROPEAN SEARCH REPORT**

Application Number

EP   92 10 4021

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | GB-A-2 176 677 (MITSUBISHI DENKI)<br>* the whole document *<br>--- | 1,3,6 | G03G15/00<br>G03G15/04<br>H04N1/387 |
| X | EP-A-0 235 398 (AGFA-GEVAERT)<br>* the whole document *<br>--- | 1,3,6 | |
| X | EP-A-0 397 428 (CANON)<br>* claim 1; figures 1,28,29,46,48 *<br><br>----- | 1,3,6,9 | |

|  |  |
|---|---|
|  | TECHNICAL FIELDS SEARCHED (Int. Cl.5 )<br><br>G03G<br>H04N |

The present search report has been drawn up for all claims

| Place of search | Date of completion of the search | Examiner |
|---|---|---|
| BERLIN | 27 JULY 1992 | HOPPE H. |

EPO FORM 1503 03.82 (P0401)